# EUROPEAN PATENT SPECIFICATION

(11) **EP 3 038 980 B1**
(45) Date of publication and mention of the grant of the patent: **15.05.2019**
(21) Application number: 14762184.1
(22) Date of filing: 28.08.2014
(51) Int. Cl.: C03C 3/00, C03C 8/02, C03C 8/04, C03C 8/14, C03C 17/00, C03C 17/02

(54) **HEAT TREATABLE PAINTED GLASS SUBSTRATE, AND/OR METHOD OF MAKING THE SAME**
WÄRMEBEHANDELBARES LACKIERTES GLASSUBSTRAT UND/ODER VERFAHREN ZUR HERSTELLUNG DAVON
SUBSTRAT DE VERRE PEINT APTE AU TRAITEMENT THERMIQUE, ET/OU SON PROCÉDÉ DE FABRICATION

(30) Priority: 30.08.2013 US 201314014996
(43) Date of publication of application: 06.07.2016
(73) Proprietor: Guardian Glass, LLC, Auburn Hills MI 48326 (US)
(72) Inventor: MING, Yaqiang, Lexington, KY 40513 (US); DEVISETTI, Suresh, Canton, MI 48187 (US)
(74) Representative: Hoyng Rokh Monegier LLP
(86) International application number: PCT/US2014/053046
(87) International publication number: WO 2015/031555

(56) References cited:
- EP-A1- 0 803 480
- WO-A1-2007/104752
- WO-A1-2008/130747
- US-A1- 2002 004 443
- US-A1- 2012 196 099

## Description

The embodiments of this invention relate to painted glass substrates, and/or methods of making the same. More particularly, the embodiments relate to heat treatable painted glass substrates that have 5-10 wt. % organic content in an as-deposited state, and/or methods of making the same. The painted products of these embodiments advantageously have a good durability before and after heat treatment, and/or exhibit a large color change upon heat treatment.

### BACKGROUND AND SUMMARY OF EXAMPLE EMBODIMENTS OF THE INVENTION

Colored glass is being more and more popular in residential, commercial, and interior applications, e.g., as a decorative item to bring aesthetically pleasing vibrant colors into human life.

Various processes have been used to create these products, which oftentimes involve painted or lacquered first and/or second surfaces. For instance, a glass substrate may be covered with a layer of organic-based paint that is then dried and/or cured in an oven. Typical organic-based paints may comprise, for example, polyurethane resin, alkyd resin, acrylic resin, and/or the like. Before applying the paint, the glass may be treated with a silane. Unfortunately, however, when conventional lacquered glass substrates covered with a layer of organic-based paint are heat treated at a high temperature, the lacquer burns, is deteriorated, and/or may be completely destroyed. In fact, conventional lacquered glass substrates generally will not survive temperatures higher than 200 or 250 degrees C without suffering from some form of degradation. As a result, lacquered substrates of this type need to be shaped, sized, cut, ground, edge seemed, and/or otherwise processed prior to heat treatment (e.g., heat strengthening and/or thermally tempering) before lacquering, as such processes are not possible post heat treatment. This requirement unfortunately poses significant challenges when it comes to mass and continuous production.

As another example, a glass substrate may be covered with a layer of infrared (IR) or ultraviolet (UV) curable enamel and then cured, and heat treatment may be performed thereafter. The initial curing process is intended to provide limited mechanical resistance to the coated glass substrate, e.g., to allow it to be handled on the manufacturing line until it reaches the oven where heat treatment is to take place. Unfortunately, however, the curing process typically does not provide a mechanical and water resistance sufficient for allowing the coated glass substrate to be transported, cut, edge-worked, stocked, and/or otherwise processed, before the heat treatment. It therefore typically is necessary for such conventional enameled glass to be heat treated immediately after production and on the same production line.

Yet further lacquered glass substrates have been developed by providing on the glass substrates a coating comprising, in order moving away from the substrate, a first layer comprising an enamel and a second layer comprising a resin. See, for example, WO 2007/104752. Such glass substrates may be handled and transported before heat treatment without damaging the coating. For instance, they may be cut and ground before heat treatment without causing the coating to peel off or to be damaged at the borders of the cutting line. They also may at least sometimes offer good resistance under running water, at least priori to heat treatment. Generally speaking, the second layer is present to provide for temporary resistance to the lacquered glass substrate prior to heat treatment, and it is intended to be removed or destroyed after heat treatment. Unfortunately, although this two layer system may offer good scratch resistance prior to heat treatment, the resistance of the first layer before the deposition of the second layer sometimes is poor. As a result, handling tools such as conveyor rollers, suction devices, and/or the like, can sometimes damage the first layer before it is protected by the second layer, thereby leading to defects in the final product.

Reference document US2012/0196099 A1 relates to a glass sheet, comprising, on a surface, a coating of enamel, wherein the coating comprises between 11 and 40 wt% of an organic material, based on a total weight of the coating, and wherein the coating is in direct contact with the glass sheet.

Reference document WO 2007/104752 A1 relates to a glass sheet having a coating provided on a surface thereof wherein the coating comprises in order from the glass a first layer comprising an enamel and a second layer comprising a resin.

Reference document EP0803480 A1 relates to zinc-based ceramic enamels useful as colored borders of automotive glass.

Reference document WO2008/130747 A1 relates to obscuration enamel compositions being substantially free of Na2O.

Reference document US2002/0004443 A1 relates to glass compositions from which can be obtained bismuth borosilicate-containing glass frits whihc have a lower boron oxide content.

Thus, it will be appreciated that there is a need in the art for improved painted glass substrates, and/or methods of making the same. For instance, it will be appreciated that it would be desirable to provide painted glass substrates that are heat treatable, and that are mechanically durable before and after heat treatment.

The above noted problems can be solved by a heat treatable coated article according to claim 1 and a method of making a coated article according to claim 6.

U.S. Publication No. 2012/0196099 describes a laquered product in which an enamel is provided on at least one surface of a glass substrate. The '099 publication specifies that its enamel comprises between 11 and 40% of organic material and indicates that its enameled product is heat treatable. According to the '099 publication, the increased content of organic material in the coating of enamel may provide advantageous mechanical resistance properties before heat treatment such that, for example, enameled products may be processed with common handling tools (e.g., rollers, suckers) and transported before heat treatment without damaging the coating via scratching or the like. Still further, the '099 publication states that its coating compositions may be cured at lower temperatures and/or more rapidly than previous known coatings for lacquered glass substrates.

The preferred amount of organic material according to the '099 publication is between 11 and 25%. The upper limit of organic material in the coating of enamel purportedly allows the so-called "stardust" phenomenon (where a paint coating is not fully homogeneous and includes some (microscopic) holes that show up as small light points) to be avoided. Comparative Examples 1-3 in the '099 publication help establish the lower end organic material requirement of at least 11%. Table I, for example, shows that providing less than 11 wt % organic content in the coating results in what the '099 patent considers to be unacceptable in terms of durability.

Despite the evidence produced in the '099 publication, it has been discovered by the inventors of the instant application that it is in fact possible to reduce the organic content below 11 wt. %. More particularly, it surprisingly and unexpectedly has been discovered that organic polymeric content can be reduced to 5-10 wt. %, more preferably 5-9 wt. %, while still achieving suitable durability both before and after heat treatment.

In this invention, there is provided a heat treatable coated article as described in claim 1 comprising a glass substrate and a coating applied directly to a major surface of the glass substrate from a paint. The coating once cured comprises 5=10 wt. % of an organic material, based on a total weight of the coating. The coated article optionally may be heat strengthened and/or thermally tempered.

In this invention, a method of making a coated article as described in claim 6 is provided. A paint is applied to a major surface of a glass substrate. The paint is cured following its application, and the coating once cured comprises 5-10 wt. % of an organic material, based on a total weight of the coating. The coated article comprising the glass substrate with the cured paint thereon is heat treatable and it may in some instances optionally be heat strengthened and/or thermally tempered.

### BRIEF DESCRIPTION OF THE DRAWINGS

These and other features and advantages may be better and more completely understood by reference to the following detailed description of exemplary illustrative embodiments in conjunction with the drawings, of which:
FIGURE 1 is a schematic cross-sectional view of a painted article in accordance with certain example embodiments;
FIGURE 2 is a flowchart showing a process that may be used to make painted articles in accordance with certain example embodiments;
FIGURE 3 plots weight percentage losses for organic materials for a set of white paint samples made in accordance with certain example embodiments;
FIGURE 4 is an interval plot showing the amount of organic material in the series of samples of Fig. 3;
FIGURE 5 is a graph relating weight loss percents for organic materials to b* values for an example white paint;
FIGURE 6 is a graph relating weight loss percents for organic materials to L* values for an example black paint;
FIGURE 7 is a table showing detailed information concerning organic wt. % losses from various portions of samples that were painted white and black in accordance with the example techniques disclosed herein;
FIGURES 8A and 8B show white samples, in the as coated and tempered states; and
FIGURES 9A and 9B show black samples, in the as coated and tempered states.

### DETAILED DESCRIPTION OF EXAMPLE EMBODIMENTS OF THE INVENTION

One embodiment of this invention relates to heat treatable glass substrates coated with a paint or lacquer comprises between 5 to 10 wt. % organic polymeric materials after solvents are evaporated and/or some low molecular weight polymers are burned off (e.g., by a drying oven). The sheets with the paint or lacquer enamel can be heat treated (e.g., heat strengthened and/or thermally tempered) at high temperatures, and they can be handled and transported both before and after heat treatment without damaging the coating. For instance, the sheets with the paint or lacquer enamel may be cut, ground, have holes drilled therein, etc., without causing the coating to peel off or to become damaged at the borders of the cutting line and drilling hole edges, both before and after heat treatment. The glass sheets also offer good water resistance, and the coatings do not peel off or degrade during edge grinding, storage, transportation, etc.

Certain example embodiments therefore make it possible to provide a stock sheet that can be coated, then cut, and then heat treated, thereby enabling processing efficiencies to be gained. The good durability of the coating in the as-deposited and heat treated states, additionally or alternatively, advantageously adds flexibility to the manufacturing process, e.g., as an intermediate product can be shipped to a fabricator before finishing (e.g., sizing) and/or heat treatment, essentially enabling intermediate products to be handled and/or otherwise processed as if they were conventional float glass substrates. As yet another advantage, certain example embodiments may involve a significant color change after heat treatment, thereby enabling heat treated and non heat treated products to be easily distinguished from one another by means of visual inspection. In some instances, it is possible to store sheets with as-deposited paints thereon for lengthy periods of time, e.g., up to and perhaps beyond 6 months.

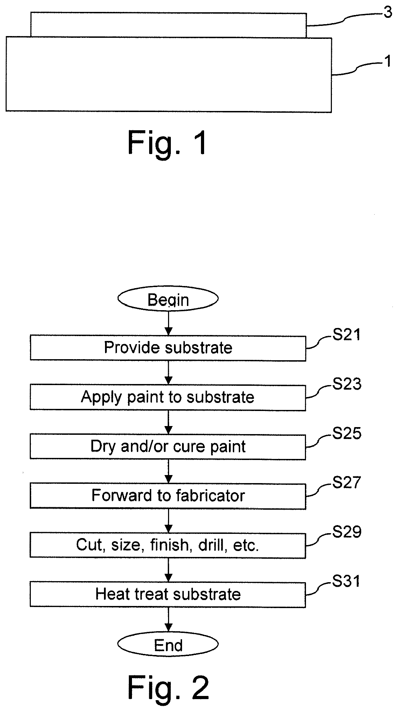

Fig. 1 is a schematic cross-sectional view of a painted article in accordance with certain example embodiments, and Fig. 2 is a flowchart showing a process that may be used to make painted articles in accordance with certain example embodiments. A substrate 1 is provided in step S21, and a paint is applied to a desired thickness on at least one major surface of the substrate 1 in step S23. In certain example embodiments, the substrate 1 may be a glass substrate and in some cases it may be a large stock sheet.

The paint may be based on a Fenzi HT paint such as, for example, the GVC-0236A (white) and GVC-0236B (black) paints, in certain example embodiments, and it may be applied by any suitable means. Suitable application techniques may involve, for example, curtain coating, roll coating, spray coating, etc. The viscosity of the paint may be adjusted in dependence on the selected application technique and/or apparatus. For instance, if curtain coating is used, the viscosity of the material may be lowered, e.g., by adding xylene or the like. Adhesion promoters and/or the like also may be added in certain example embodiments.

In general, certain example embodiments may involve a paint at least initially comprising 15-35 wt. % (more preferably 20-30 wt. %) pigment, 40-60 wt. % (more preferably 45-55 wt. %) frit (e.g., of or including zinc, bismuth, and/or the like), 10-17 wt. % (more preferably 11-15 wt. %) organic polymer, and 15-25 wt. % organic solvent. In any case the paint is at least limited as described in appended claim 1. The organic materials may include one or more of the following and/or other materials: a polyol, an alkyd, an acrylic, a polyacrylic, a polyacrylate, a polymethacrylate, an acrylamide, melamine, a poly melamine, a polyolmelamine, a polycarbonate, an acrylic-styrene, vinylacrylic, a urethane, a polyurethane, a polyester, a polyolefin, a urethane alkyd, a polyurea, an amino resin, a polyamide, an epoxy, an epoxy ester, a phenolic resin, a silicon resin, PVC, PVB, a water-based resin, and a reaction product of photocurable chemical. Pigments may be selected based on the desired coloration. For example, titanium oxide of any suitable stoichiometry (e.g., titania or TiO₂) may be used for white paints. As another example, chromium oxide, copper oxide, and/or other materials of any suitable stoichiometry may be used for black paints.

Once applied, the layer of paint may be dried and/or cured in step S25 to produce the layer of paint 3, e.g., to provide suitable adhesion between the layer of paint 3 and the substrate 1 and/or to provide suitable durability of the layer of paint 3. Once dried and/or cured, the as-deposited coating preferably includes 5-10% organic materials, and more preferably 5-9% organic materials. Because at least some of the organic material may be removed as a result of an initial drying and/or curing process, subsequent heat treatment (if implemented) may be performed more quickly, as there is no need to remove as much organic material. In the present invention the curing is accomplished as described in claim 6.

It may in some instances be desirable to take care during drying and/or curing steps to remove all or substantially all solvent (possibly including water) that may exist on the substrate and/or on the coating, as it has been found that leaving excess material of this kind before curing and/or heat treatment may lead to wetting or other defects. It thus may be desirable to pre-heat the substrate with or without the coating to a temperature slightly above ambient to aid in the removal of solvent (possibly including water).

In an optional step, the substrate 1 with the layer of paint 3 provided thereon may be forwarded to a fabricator or other party in step S27. The fabricator may store the as-deposited substrate for subsequent processing. Because the substrate 1 has not yet been heat treated, it is still possible to process it with the layer of paint 3 thereon. Processing may include, for example, cutting, sizing, finishing, the drilling of holes, etc., e.g., as indicated in step S29. The thus-processed articles (e.g., cut from the larger stock sheet) optionally may be heat treated in step S31.

It is noted that the example steps shown in and described in connection with Fig. 2 may be performed in any suitable order and by any suitable party. For instance, a large stock sheet may be coated, cut, and tempered prior to shipment to a fabricator. It also is noted that certain example embodiments contemplate using coating substrates that are already pre-sized to at least some extent and thus may not be stock sheets per se.

The amount of organics preferably is substantially uniform across a major portion of the substrate on which the layer of paint 3 is applied. For example, the amount of organics preferably is within 2 wt. % of a given value, more preferably within 1 wt. % of a given value, and still more preferably within 0.5 wt. % of a given value. This uniformity preferably applies to the as-deposited state so that aesthetic and durability performance will be similar across the lite in both as-deposited and optional heat treated states. Example durability performance data is provided below.

As indicated above, heat treatment may result in a large color shift, which may in some instances be helpful in distinguishing between heat treated and non heat treated articles. Preferably, the delta E* value will be detectable to the human eye and at least 2, more preferably at least 3, and still more preferably at least 5. The delta E* value may be driven by a large change in one color coordinate. For example, it has been found that b* color coordinate changes tend to be noticeable for white paints, whereas L* color coordinate changes tend to be noticeable for black paints.

In certain example embodiments, the paint may be initially applied to thickness of 10-150 microns, more preferably 15-100 microns, and still more preferably 40-70 microns. It is noted that these thickness ranges (and all sub-ranges) also are contemplated for both post-cure and pre heat treatment phases, and post heat treatment phases.

### EXAMPLES

For an initial set of Examples, one drum (200 kg) of Fenzi GVC-0236A white paint dispersion was mixed with, and its viscosity was lowered by adding, xylene step-by-step. More particularly, the viscosity lowered to 32s from 130s of Zahn #3 by adding about 6.1 kg xylene. The mixture was curtain coated onto 4 mm thick glass substrates, and a linear relationship between flow rate and pump speed was observed. Prior to viscosity alteration, the paint comprised:

| Ingredient | Amount |
|---|---|
| Pigment | ∼27-31 wt. % |
| Zinc-based frit | ∼45-50 wt. % |
| Organic polymer | ∼10-14 wt. % |
| Organic solvent | ∼18-23 wt. % |

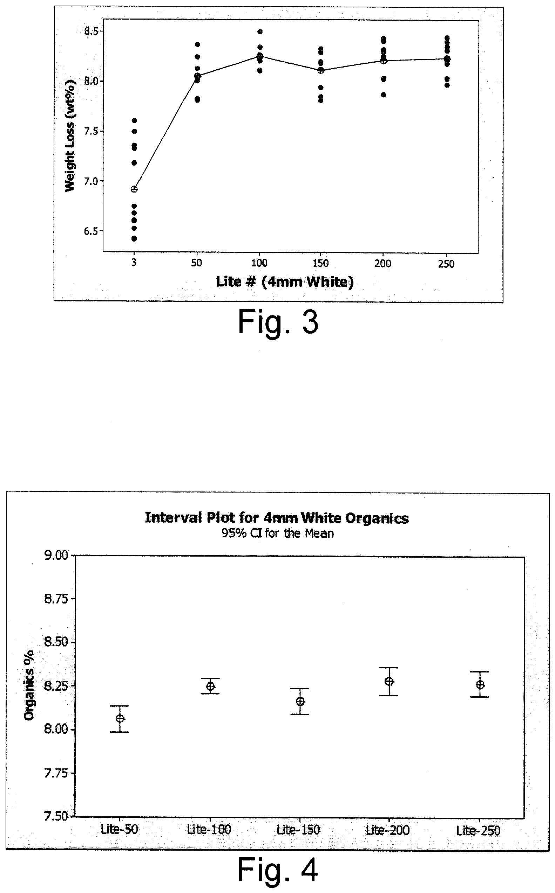

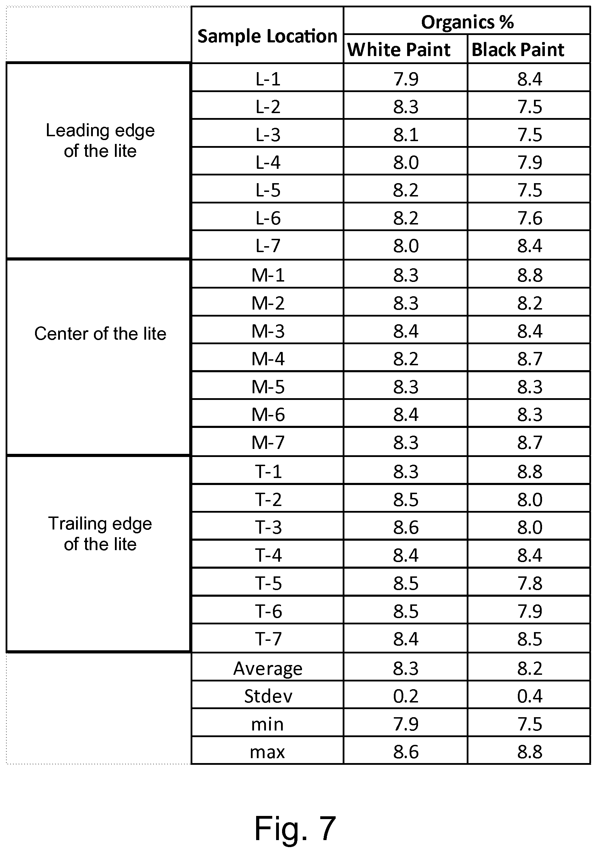

Fig. 3 plots weight percentage losses for organic materials for a set of white paint samples made in accordance with certain example embodiments. Fig. 3 corresponds to the 4 mm thick samples. As shown in the Fig. 3 plot, weight percentage losses for organic materials reached about 8.3 wt. %, with a standard deviation of 0.2 wt. %, after an initial stabilization period involving 50 lites being coated and heated. Fig. 4 is an interval plot showing the amount of organic material in the series of samples of Fig. 3. For each sample, 21 data points were gathered and more particularly, seven data points were gathered at the leading edge of the lite, seven data points were gathered at the center of the lite, and seven data points were gathered at the trailing edge of the lite. In the distribution shown in the Fig. 4 plot, data is shown with respect to the 95% confidence interval for the mean. Additional detailed information is provided in connection with the Fig. 7 table discussed in greater detail below.

Different temperature profiles may be used in connection with different embodiments. As an example, the substrate temperature may be ramped generally constantly from room temperature to about 300 degrees C over 5 minutes and ramped down to about 200 degrees C over 4 minutes, e.g., while operating at a line speed of 8 feet per minute.

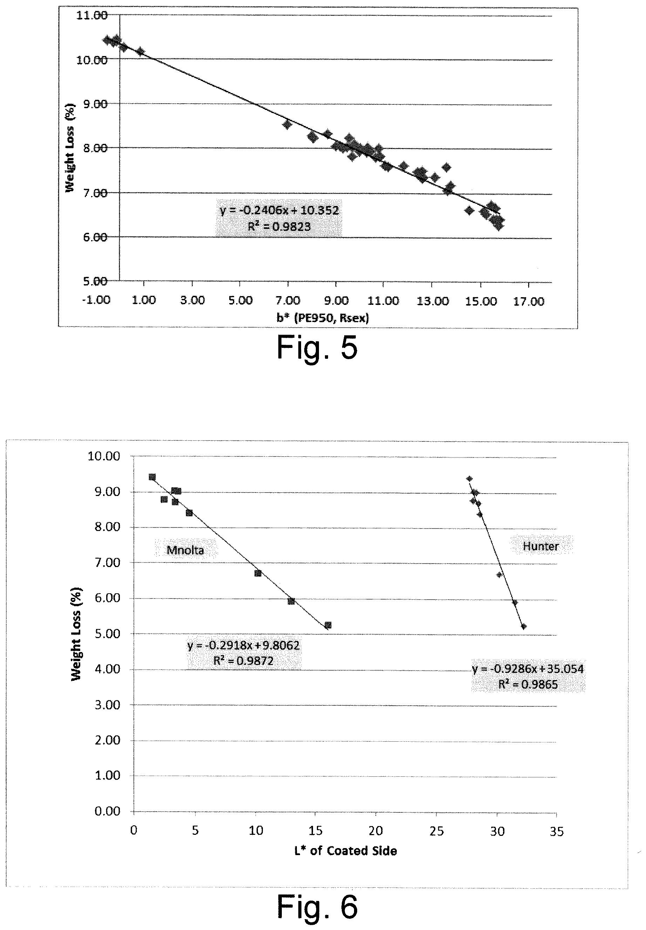

When it came to assessing the "whiteness" of a sample, b* color coordinate values were found to be most significant. In this regard, Fig. 5 is a graph relating weight loss percents for organic materials to b* values for an example white paint. Data was gathered using a Perkin-Elmer Lambda 950 Spectrophotometer operating in RSEX mode. As will be appreciated from the Fig. 5 graph, the relationship between the organics' weight percent and b* value is highly linear, and the lower the organic wt. % loss, the higher the b* value. By contrast, the greater the wt. % loss for the organic materials, the lower the b* value. This would generally correspond to a reduction in the "yellowness" of the coating that otherwise might be attributable to the presence of the organic materials.

Samples were thermally tempered at 650 degrees C for 6 minutes, and a HunterLab UltraScan XE apparatus operating in RSEX mode was used to measure color coordinate data. A significant color change was observed and is empirically confirmed by looking at the significant change in b* value. It is believed that the tempering process removed yet more of the organic material, thus shifting the b* value from positive to negative in this sample. This again would generally correspond to a reduction in the "yellowness" of the coating that otherwise might be attributable to the presence of the organic materials. The b* shift upon heat treatment preferably is 5-20, more preferably 7-15, and sometimes 9-13.

| | As-Coated | Tempered | Difference |
|---|---|---|---|
| L* | 92.5 | 88.9 | 3.6 |
| a* | -2 | -0.7 | -1.3 |
| b* | 9.5 | -2.1 | 11.6 |
| Y | 82 | 73.8 | 8.2 |

For a second set of Examples, one drum (200 kg) of Fenzi GVC-0236B black paint dispersion was mixed with, and its viscosity was lowered by adding, xylene step-by-step. More particularly, the viscosity lowered to 28s from 68s of Zahn #3 by adding about 4.5 kg xylene. The mixture was curtain coated onto 4 mm thick glass substrates, and a linear relationship between flow rate and pump speed was observed. Prior to viscosity alteration, the paint comprised:

| Ingredient | Amount |
|---|---|
| Pigment | ∼18-23 wt. % |
| Bismuth-based frit | ∼49-53 wt. % |
| Organic polymer | ∼11-14 wt. % |
| Organic solvent | ∼15-19 wt. % |

Weight percentage losses for organic materials for black paint samples made in accordance with certain example embodiments were calculated. Weight percentage losses for organic materials reached about 8.2 wt. %, with a standard deviation of 0.4 wt. %, after an initial stabilization period being coated and heated. Additional detailed information is provided in connection with the Fig. 7 table discussed in greater detail below.

As noted above, different temperature profiles may be used in connection with different embodiments. For example, the same or similar profile as described above may be used, or it may be modified in different instances. An example profile for this example paint may involve, for example, a temperature ramp that is generally constant from room temperature to about 300 degrees C over 5 minutes and ramp down to about 250 degrees C over 4 minutes, e.g., while operating at a line speed of 8 feet per minute.

When it came to assessing the "blackness" of a sample, L* color coordinate values were found to be most significant. In this regard, Fig. 6 is a graph relating weight loss percents for organic materials to L* values for an example black paint. Data was gathered using different apparatuses a Konica Minolta CM-2500D Spectrophotometer and a HunterLab UltraScan XE. As will be appreciated from the Fig. 6 graph, the relationship between the organics' weight percent and L* value is highly linear, and the lower the organic wt. % loss, the higher the L* value. By contrast, the greater the wt. % loss for the organic materials, the lower the L* value. This would generally correspond to a reduction in the "lightening" of the coating that otherwise might be attributable to the presence of the organic materials.

Samples were thermally tempered at 650 degrees C for 6 minutes, and a HunterLab UltraScan XE apparatus operating in RSEX mode was used to measure color coordinate data. A significant color change was observed and is empirically confirmed by looking at the significant decrease in L* value. This again would generally correspond to a reduction in the "lightening" of the coating that otherwise might be attributable to the presence of the organic materials. The L* shift upon heat treatment preferably is 7-25, more preferably 10-20, and sometimes 13-17.

| | As-Coated | Tempered | Difference |
|---|---|---|---|
| L* | 27.7 | 12 | 15.7 |
| a* | 0.5 | 0.6 | 0.1 |
| b* | -1.8 | -3.3 | 1.5 |
| Y | 5.4 | 1.4 | 4 |

Fig. 7 is a table showing detailed information concerning organic wt. % losses from various portions of samples that were painted white and black in accordance with the example techniques disclosed herein. As shown in Fig. 7 and as noted above, the average organic wt. % present across the lite was 8.3 wt. % for the white sample and 8.2 wt. % for the black sample. Also as noted above, the standard deviations in organic weight percents across the samples were 0.2 and 0.4 wt. %, respectively. The organic weight percent varied from 7.9-8.6 wt. % for the white sample, and 7.5-8.8 wt. % for the black sample.

The samples also performed surprisingly well from durability standpoints, particularly in view of the fact that the '099 publication indicates that organic weight percents less than 11 wt. % will not be sufficiently durable. The table below compares a 13 wt. % organic sample to an 8.30 wt. % organic sample, demonstrating this surprising and unexpected result. It will be appreciated that durability in other instances may be measured in some or all of these and/or other ways, e.g., with the same or different target parameters.

| | Target | 13 wt. % organic sample | 8.30 wt. % organic sample |
|---|---|---|---|
| As Coated | | | |
| CASS Test - 120 hrs. | No physical damage post exposure, tape pull < 15% removal (≥3B) | Pass | Pass |
| Condensing Humidity (50°C / 95% RH), 20 days | No physical damage to paint post exposure | Pass | Pass |
| Cross Hatch Tape Pull | < 15% sample removal | 3B | 3B |
| MEK Rub (cycles) | Good curing | 32 | 60 |
| Long Term Storage | No paint delamination after 6 months | > 4 month, in progress | > 2 month, in progress |
| Fabrication Tests (seaming, drilling, and grinding) | No peeling or chipping of the coating | Pass | Pass |
| | | | |

| Heat Treated | | | |
|---|---|---|---|
| Damp Heat (85°C / 85% RH) | No physical damage post exposure, tape pull < 15% removal (≥3B) | Pass | Pass |
| CASS Test - 120 hrs. | No physical damage post exposure, tape pull < 15% removal (≥3B) | Pass | Pass |
| MEK Rub (cycles) | No coating removed | >100 | >100 |
| Washer brush test (500 cycles) | Few pin holes and scratches | Pass | Pass |

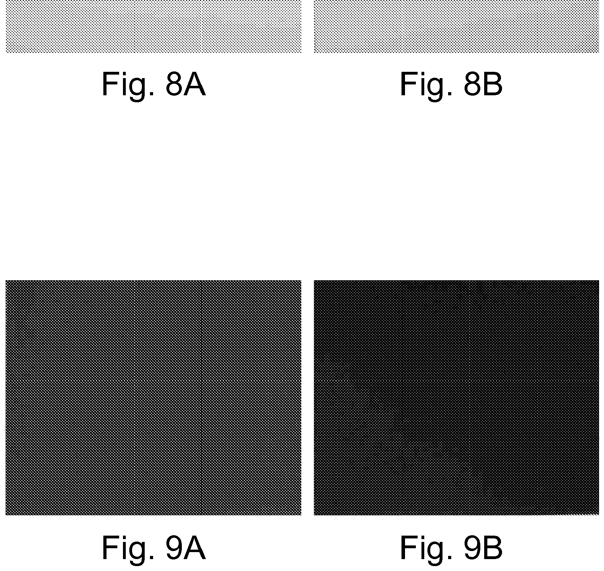

Heat treatment was performed at 650 degrees C for 6 minutes. Figs. 8A and 8B show white samples, in the as coated and tempered states; and Figs. 9A and 9B show black samples, in the as coated and tempered states. Color changes clearly are visibly detectable.

Although specific white and black paint example compositions are provided above, it is noted that other compositions may be used to achieve the same or similar coloration. For instance, different pigments and/or combinations of pigments may be used to achieve the same or similar coloration, together with the same or different base frit material(s). In a similar vein, although white and black paints are mentioned, it will be appreciated that other color paints may be used in different example embodiments.

The terms "heat treatment" and "heat treating" as used herein mean heating the article to a temperature sufficient to achieve thermal tempering and/or heat strengthening of the glass-inclusive article. This definition includes, for example, heating a coated article in an oven or furnace at a temperature of at least about 550 degrees C, more preferably at least about 580 degrees C, more preferably at least about 600 degrees C, more preferably at least about 620 degrees C, and most preferably at least about 650 degrees C for a sufficient period to allow tempering and/or heat strengthening. This may be for at least about two minutes, up to about 10 minutes, up to 15 minutes, etc., in certain example embodiments.

While a layer, layer system, paint, lacquer, coating, or the like, may be said to be "on" or "supported by" a substrate, layer, layer system, paint, lacquer, coating, or the like, other layer(s), layer system(s), paint(s), lacquer(s), coating(s), and/or the like may be provided therebetween. Thus, for example, the paints or lacquers described above may be considered "on" and "supported by" the substrate and/or other coatings or layers even if other layer(s), paint(s), or lacquer(s) are provided therebetween.

In the frame of the present invention a heat treatable coated article comprising a glass substrate is provided. A coating is applied directly to a major surface of the glass substrate from a paint. In the present invention the coating once cured comprises 5-10 wt. %, more preferably 5-9 wt. %, and sometimes 5-8 wt. %, of an organic material, based on a total weight of the coating.

The coating comprises a pigment and a glass frit. Within the frame of the present invention the frit may comprise 40-60 wt. % (more preferably 45-55 wt. %) of a zinc-based material; and the coating may have a whitish appearance in an as-deposited state. In certain example embodiments, the b* value of the coated article may shift downwardly by 9-13 upon heat treatment. Alternatively, the frit may comprise 40-60 wt. % (more preferably 45-55 wt. %) of a bismuth-based material and the coating may have a blackish appearance in an as-deposited state. In certain example embodiments, the L* value of the coated article may shift downwardly by 13-17 upon heat treatment.

In addition to the features of either of the two previous paragraphs, in certain example embodiments, the coated article may be heat strengthened and/or thermally tempering.

In the frame of the present invention a method of making a coated article as described in claim 6 is provided. A paint is applied to a major surface of a glass substrate. The paint is cured following application, and the coating once cured comprises 5-10 wt. % of an organic material, based on a total weight of the coating. The coated article comprising the glass substrate with the cured paint thereon is heat treatable. In certain example embodiments, the coating once cured may comprise 5-9 wt. %, and sometimes 5-8 wt. %, of an organic material, based on a total weight of the coating.

In addition to the features of the previous paragraph, in certain example embodiments, the applying may comprise wet applying in connection with a curtain coater.

The curing includes heating the glass substrate with the paint applied thereon at a temperature of about 300 degrees C for no more than 15 minutes. For instance, the curing may include heating the glass substrate with the paint applied thereon at a temperature of about 200-300 degrees C for no more than 10 minutes.

In addition to the features of any of the three previous paragraphs, in certain example embodiments, the coated article with the paint applied thereon may be heat treating.

In addition to the features of any of the four previous paragraphs, in certain example embodiments, the coated article may be pre-heated prior to curing and/or heat treating.

In addition to the features of any of the five previous paragraphs, in certain example embodiments, the coated article may have a whitish appearance prior to heat treatment. In some of these example instances, the b* value of the coated article may shift downwardly by 9-13 as a result of heat treating. In addition to the features of any of the five previous paragraphs, in certain example embodiments, the coated article may have a blackish appearance prior to heat treatment that is visibly blacker following heat treatment.. In some of these example instances, the L* value of the coated article may shift downwardly by 13-17 as a result of heat treating.

In addition to the features of any of the six previous paragraphs, in certain example embodiments, the substrate may be sized prior to heat treating.

In addition to the features of any of the 10 previous paragraphs, in certain example embodiments, the organic material may include a polymer

In addition to the features of any of the 11 previous paragraphs, in certain example embodiments, the organic material includes a polyolmelamine.

While the invention has been described in connection with what is presently considered to be the most practical and preferred embodiment, it is to be understood that the invention is not to be limited to the disclosed embodiment, but on the contrary, is intended to cover various modifications and equivalent arrangements included within the scope of the appended claims.

## Claims

1. A heat treatable coated article comprising:
a glass substrate (1);
a coating applied directly to a major surface of the glass substrate (1) from a paint (3) and cured, wherein the curing (S25) includes heating the glass substrate (1) with the paint (3) applied thereon at a temperature of 300 degrees C for no more than 15 minutes, or wherein the curing (S25) includes heating the glass substrate (1) with the paint (3) applied thereon at a temperature of 200-300 degrees C for no more than 10 minutes,
wherein the coating once cured comprising 5-10 wt. % of an organic material, based on a total weight of the coating and
wherein the coating comprises a pigment and a glass frit, wherein the frit comprises 40-60 wt. % of a zinc-based material and the coating has a whitish appearance in an as-deposited state or
wherein the frit comprises 40-60 wt. % of a bismuth-based material and the coating has a blackish appearance in an as-deposited state,
wherein heat treatable means that the coated article may be thermal tempered and/or heat strengthened.

2. The coated article of any preceding claim, wherein the coating once cured comprising 5-9 wt. % of an organic material, based on a total weight of the coating.

3. The coated article of any preceding claim, wherein the coating once cured comprising 5-8 wt. % of an organic material, based on a total weight of the coating.

4. The coated article of any preceding claim, wherein the b* value of the coated article shifts downwardly by 9-13 upon heat treatment.

5. A heat treated coated article comprising the coated article of any preceding claim following heat strengthening and/or thermal tempering.

6. A method of making a coated article, the method comprising:
Applying (S23) a paint (3) to a major surface of a glass substrate (1); and
curing the paint (3) following application (S25),
wherein the curing (S25) includes heating the glass substrate (1) with the paint (3) applied thereon at a temperature of 300 degrees C for no more than 15 minutes, or wherein the curing (S25) includes heating the glass substrate (1) with the paint (3) applied thereon at a temperature of 200-300 degrees C for no more than 10 minutes,
the coating once cured comprising 5-10 wt. % of an organic material, based on a total weight of the coating,
wherein the coating comprises a pigment and a glass frit, wherein the frit comprises 40-60 wt. % of a zinc-based material and the coating has a whitish appearance in an as-deposited state or
wherein the frit comprises 40-60 wt. % of a bismuth-based material and the coating has a blackish appearance in an as-deposited state,
wherein the coated article comprising the glass substrate (1) with the cured paint (3) thereon is heat treatable,
wherein heat treatable means that the coated article may be thermal tempered and/or heat strengthened.

7. The method of claim 6, wherein the coating once cured comprising 5-9 wt. % of an organic material, based on a total weight of the coating.

8. The method of any of claims 6-7, wherein the applying (S2₃) comprises wet applying in connection with a curtain coater.

9. The method of any of claims 6-8, further comprising heat treating (S31) after curing (S25) the coated article with the paint (3) applied thereon.

10. The method of claim 9, further comprising pre-heating the coated article prior to said curing (S25) and/or heat treating (S31).

11. The method of any of claims 6-10, further comprising cutting (S29) the substrate (1) prior to said heat treating.

## Patentansprüche

1. Wärmebehandelbarer beschichteter Gegenstand, umfassend:
ein Glassubstrat (1);
eine direkt auf eine Hauptoberfläche des Glassubstrats (1) aufgebrachte und ausgehärtete Beschichtung aus einem Lack (3), wobei das Aushärten (S25) das Erwärmen des Glassubstrats (1) mit dem darauf aufgebrachten Lack (3) bei einer Temperatur von 300 Grad C für nicht mehr als 15 Minuten beinhaltet oder wobei das Aushärten (S25) das Erwärmen des Glassubstrats (1) mit dem darauf aufgebrachten Lack (3) bei einer Temperatur von 200 bis 300 Grad C für nicht mehr als 10 Minuten beinhaltet,
wobei die einmal ausgehärtete Beschichtung 5 bis 10 Gew.-% eines organischen Materials, bezogen auf ein Gesamtgewicht der Beschichtung, umfasst und
wobei die Beschichtung ein Pigment und eine Glasfritte umfasst, wobei die Fritte 40 bis 60 Gew.-% eines Materials auf Zinkbasis umfasst und die Beschichtung ein weißliches Aussehen in einem abgeschiedenen Zustand aufweist oder
wobei die Fritte 40 bis 60 Gew.-% eines Materials auf Wismutbasis umfasst und die Beschichtung ein schwärzliches Aussehen in einem abgeschiedenen Zustand aufweist,
wobei wärmebehandelbar bedeutet, dass der beschichtete Gegenstand thermisch vorgespannt und/oder wärmeverfestigt werden kann.

2. Beschichteter Gegenstand nach einem vorangehenden Anspruch, wobei die einmal ausgehärtete Beschichtung 5 bis 9 Gew.-% eines organischen Materials, bezogen auf ein Gesamtgewicht der Beschichtung, umfasst.

3. Beschichteter Gegenstand nach einem vorangehenden Anspruch, wobei die einmal ausgehärtete Beschichtung 5 bis 8 Gew.-% eines organischen Materials, bezogen auf ein Gesamtgewicht der Beschichtung, umfasst.

4. Beschichteter Gegenstand nach einem vorangehenden Anspruch, wobei sich der b*-Wert des beschichteten Gegenstands nach der Wärmebehandlung um 9 bis 13 nach unten verschiebt.

5. Wärmebehandelter beschichteter Gegenstand, umfassend den beschichteten Gegenstand nach einem vorangehenden Anspruch nach Wärmeverfestigung und/oder thermischer Vorspannung.

6. Verfahren zum Herstellen eines beschichteten Gegenstands, wobei das Verfahren Folgendes umfasst:
Aufbringen (S23) eines Lacks (3) auf eine Hauptfläche eines Glassubstrats (1) und
Aushärten des Lacks (3) nach dem Auftragen (S25),
wobei das Aushärten (S25) das Erwärmen des Glassubstrats (1) mit dem darauf aufgebrachten Lack (3) bei einer Temperatur von 300 Grad C für nicht mehr als 15 Minuten beinhaltet, oder wobei das Aushärten (S25) das Erwärmen des Glassubstrats (1) mit dem darauf aufgebrachten Lack (3) bei einer Temperatur von 200 bis 300 Grad C für nicht mehr als 10 Minuten beinhaltet,
wobei die einmal ausgehärtete Beschichtung 5 bis 10 Gew.-% eines organischen Materials, bezogen auf ein Gesamtgewicht der Beschichtung, umfasst,
wobei die Beschichtung ein Pigment und eine Glasfritte umfasst, wobei die Fritte 40 bis 60 Gew.-% eines Materials auf Zinkbasis umfasst und die Beschichtung ein weißliches Aussehen in einem abgeschiedenen Zustand aufweist oder
wobei die Fritte 40 bis 60 Gew.-% eines Materials auf Wismutbasis umfasst und die Beschichtung ein schwärzliches Aussehen in einem abgeschiedenen Zustand aufweist,
wobei der beschichtete Gegenstand, der das Glassubstrat (1) mit dem darauf gehärteten Lack (3) umfasst, wärmebehandelbar ist,
wobei wärmebehandelbar bedeutet, dass der beschichtete Gegenstand thermisch vorgespannt und/oder wärmeverfestigt sein kann.

7. Verfahren nach Anspruch 6, wobei die einmal ausgehärtete Beschichtung 5 bis 9 Gew.-% eines organischen Materials, bezogen auf ein Gesamtgewicht der Beschichtung, umfasst.

8. Verfahren nach einem der Ansprüche 6 bis 7, wobei das Aufbringen (S23) das Nassaufbringen in Verbindung mit einem Vorhangbeschichter umfasst.

9. Verfahren nach einem der Ansprüche 6 bis 8, ferner umfassend Wärmebehandlung (S31) nach dem Aushärten (S25) des beschichteten Gegenstands mit dem darauf aufgebrachten Lack (3).

10. Verfahren nach Anspruch 9, ferner umfassend das Vorwärmen des beschichteten Gegenstands vor dem Aushärten (S25) und/oder der Wärmebehandlung (S31).

11. Verfahren nach einem der Ansprüche 6 bis 10, ferner umfassend das Schneiden (S29) des Substrats (1) vor der Wärmebehandlung.

## Revendications

1. Article revêtu pouvant être traité thermiquement, comprenant :
un substrat en verre (1) ;
un revêtement appliqué directement sur une surface principale du substrat de verre (1) à partir d'une peinture (3) et durci, dans lequel le durcissement (S25) inclut le chauffage du substrat de verre (1) avec la peinture (3) appliquée sur celui-ci à une température de 300 degrés C pendant au plus 15 minutes, ou dans lequel le durcissement (S25) inclut le chauffage du substrat de verre (1) avec la peinture (3) appliquée sur celui-ci à une température comprise entre 200 et 300 degrés C pendant au plus 10 minutes,
dans lequel le revêtement durci comprenant de 5 à 10 % en poids d'un matériau organique, rapporté au poids total du revêtement et
dans lequel le revêtement comprend un pigment et une fritte de verre, dans lequel la fritte comprend de 40 à 60 % en poids d'un matériau à base de zinc et le revêtement présente un aspect blanchâtre dans un état tel que déposé ou
dans lequel la fritte comprend de 40 à 60 % en poids d'un matériau à base de bismuth et le revêtement a un aspect noir dans un état tel que déposé,
dans lequel apte au traitement thermique signifie que l'article revêtu peut être trempé thermiquement et/ou renforcé thermiquement.

2. Article revêtu selon l'une quelconque des revendications précédentes, dans lequel le revêtement durci comprend de 5 à 9 % en poids d'un matériau organique, rapporté au poids total du revêtement.

3. Article revêtu selon l'une quelconque des revendications précédentes, dans lequel le revêtement une fois durci comprend de 5 à 8 % en poids d'un matériau organique, rapporté au poids total du revêtement.

4. Article revêtu selon l'une quelconque des revendications précédentes, dans lequel la valeur b* de l'article revêtu se déplace vers le bas par 9 à 13 lors d'un traitement thermique.

5. Article revêtu traité thermiquement comprenant l'article revêtu selon l'une quelconque des revendications précédentes après le renforcement thermique et/ou la trempe thermique.

6. Procédé de fabrication d'un article revêtu, le procédé comprenant :
appliquer (S23) une peinture (3) sur une surface principale d'un substrat de verre (1) ; et
(3) faire durcir la peinture après application (S25),
dans lequel le durcissement (S25) comprend le chauffage du substrat en verre (1) avec la couche de peinture (3) appliquée dessus à une température de 300 degrés C pendant pas plus de 15 minutes, ou dans lequel le durcissement (S25) inclut le chauffage du substrat en verre (1) avec la couche de peinture (3) appliquée dessus à une température comprise en 200 et 300 degrés C pendant pas plus de 10 minutes,
le revêtement une fois durci comprenant de 5 à 10 % en poids d'un matériau organique, rapporté au poids total du revêtement,
dans lequel le revêtement comprend un pigment et une fritte de verre, dans lequel la fritte comprenant de 40 à 60 % en poids d'un matériau à base de zinc et le revêtement présente un aspect blanchâtre dans un état tel que déposé ou
dans lequel la fritte comprend de 40 à 60 % d'un matériau à base de bismuth et le revêtement a un aspect noir dans un état tel que déposé,
dans lequel l'article revêtu comprenant le substrat de verre (1) avec la peinture durcie (3) sur celui-ci est apte au traitement thermique,
dans lequel le moyen apte au traitement thermique qui peut être trempé thermiquement et/ou renforcé thermiquement.

7. Procédé selon la revendication 6, dans lequel le revêtement une fois durci comprend de 5 à 9 % en poids d'un matériau organique, rapporté au poids total du revêtement.

8. Procédé selon l'une quelconque des revendications 6 à 7, dans lequel l'application (S23) comprend lune application humide en relation avec un dispositif de revêtement à rideau.

9. Procédé selon l'une quelconque des revendications 6 à 8, comprenant en outre un traitement thermique (S31) après durcissement (S25) de l'article revêtu avec la peinture appliquée dessus (3).

10. Procédé selon la revendication 9, comprenant en outre le préchauffage dudit article revêtu avant durcissement (S25) et/ou traitement thermique (S31).

11. Procédé selon l'une quelconque des revendications 6 à 10, comprenant en outre la découpe (S29) du substrat (1) avant ledit traitement thermique.
